Europäisches Patentamt

European Patent Office

Office européen des brevets

(11) Publication number:

**0 341 960**
**A2**

## (12) EUROPEAN PATENT APPLICATION

(21) Application number: 89304644.1

(51) Int. Cl.⁴: **G01J 9/02 , G01B 9/02**

(22) Date of filing: 08.05.89

(30) Priority: 10.05.88 US 192279

(43) Date of publication of application:
15.11.89 Bulletin 89/46

(84) Designated Contracting States:
**DE FR GB**

(71) Applicant: **Hewlett-Packard Company**
**3000 Hanover Street**
**Palo Alto California 94304(US)**

(72) Inventor: **Wayne, Kenneth.J.**
**15111 Park Drive**
**Saratoga California 95070(US)**

(74) Representative: **Williams, John Francis et al**
**J.F. Williams & Co 34 Tavistock Street**
**London WC2E 7PB(GB)**

(54) **Method for improving performance of a laser interferometer in the presence of wavefront distortion.**

(57) Method and apparatus for obtaining an enhanced clearer measurement signal with improved fringe contrast from a laser interferometer. The interferometer sends a laser beam (12) through atmospheric air to a polarizing or nonpolarizing beamsplitter (13) that sends one laser beam portion (14,16) to a fixed reference retroreflector (15) and another portion (19,21) to a movable measurement retroreflector (20). Both beams, upon retroreflection go back to the beamsplitter and are recombined to produce a combined beam (22) that is then sent to an aperture (30) such that only a small selected portion of that combined beam passes through the aperture, attenuating the energy of the combined beam but increasing its fringe contrast. This portion is sent to a detector (32) and is subsequently amplified by a high-gain amplifier.

FIG. 3

# METHOD FOR IMPROVING PERFORMANCE OF A LASER INTERFEROMETER IN THE PRESENCE OF WAVEFRONT DISTORTION

This invention relates to improvements in laser interferometers, enabling better signal detection in the presence of wavefront distortion caused by long paths in air or poor quality optics, and increasing the measurement range or lowering the cost of the instrument.

An interferometer of the type employed in this invention typically has a collimated light source, a beam splitter and two retroreflectors arranged so that one is movable and the other is fixed. Such an interferometer measures the displacement of the moving retroreflector when suitable means including a photo detector is provided for detecting and counting the interference fringes formed by recombining light from the two branches, i.e., from both the fixed and movable retroreflectors.

Essential to this measurement technique is that the fringes by "visible" or "detectable"; i.e., the contrast of the bright-to-dark transition across the beam aperture must by greater than the sensitivity of the photo detector. Fringe contrast is maximized when (1) the light intensities in both reference and measurement branches are equal and (2) the wavefronts of the recombined light beams are plane and parallel (See Interferometry, W.H. Steel, Cambridge University Press, pgs. 43-47).

This invention addresses the problem of degraded fringe contrast, which results when the wavefront shapes from the reference and measurement paths are distorted with respect to one another (i.e., no longer plane) or tilted with respect to one another (i.e., no longer parallel).

In practice there are typically two situations which lead to degraded fringe contrast and thus limit the usefulness of displacement measuring interferometers:

1) In measurements over long ranges even with high quality optics the range is limited by distortion of the measurement beam wavefront due to atmospheric turbulence in the beam path.

2) If (in an effort to reduce the cost of the instrument) lower quality optics are employed, the inherent imperfections in the glass components distort the wavefronts and degrade fringe contrast even when making measurements over relatively short ranges. Thus, in applications which cannot justify a high cost instrument, laser interferometers are often eliminated from consideration.

Using a laser interferometer to make displacement measurements over long distances in air (such as 30 metres or more in a machine shop) is difficult because of turbulence and thermal gradients in air. Thermal gradients and turbulence in the beam path cause at least two effects: 1) dynamic changes in air refractive index bend the laser beam off axis, so that the beam energy returning to the receiver is reduced, 2) local turbulent changes in air refractive index distort the ideally plane wavefront of the measurement beam, resulting in poor fringe contrast and reduced measurement signal amplitude.

Further, if in a heterodyne interferometer system the receiver gain is increased in an effort to amplify the weakened measurement signal, a spurious signal is detected and counted. This spurious signal causes measurement errors and inhibits the system from detecting real interruptions of the measurement beam. This spurious signal arises from polarization leakage of the measurement beam into the reference beam path. The spurious signal is weak, but when it is amplified, it masquerades as a legitimate measurement signal and provides false displacement information.

An object of the invention is to enhance the detection of interference fringes in interferometer measurement beams that have been subjected to wavefront distortion or tilt.

Another object is to eliminate spurious signals resulting from amplification of interferometer measurement beam signals having polarization leakage of one beam into the other beam path.

Another object of the present invention is to extend the operating range of a laser interferometer in, for example, a machine shop environment, by increasing the signal-to-noise ratio of the beam delivered to the detector of the interferometer.

A further object of the invention is to reclaim a weak signal, where the weakness has been caused by poor manufactured quality of the component glass optics.

An additional object is to reduce the system cost for displacement measuring interferometers by relaxing the wavefront distortion tolerances of the glass or plastic optics, without compromising system performance.

The invention comprises (1) providing a small aperture stop (e.g., approximately 2.5 mm diameter for a 6 mm diameter laser beam in the preferred embodiment, and interposing it in front of the receiver lens and also (2) providing a high receiver gain setting.

The exact size and shape of the aperture is determined by the extent and shape of the wavefront distortion. The aperture may be circular, rectangular or square. In some cases the best shape for the aperture may be a slit.

Adding a small aperture in front of the receiver photodetector as described in this invention improves the signal-to-noise ratio which has been degraded by wavefront distortion in one or both of the beams.

This invention improves the performance of heterodyne and homodyne interferometer systems which may use either polarizing or nonpolarizing beamsplitters.

When used with a polarizing beamsplitter in a heterodyne interferometer (such as in models 5527A, 5501A, and 5528A made by Hewlett-Packard), the aperture also attenuates the spurious signal from the reference branch of the interferometer which arises from polarization leakage through the beamsplitter. The spurious signal is normally well below the amplitude of the measurement signal. However, when the receiver gain is increased (in an effort to improve the amplitude of a measurement signal degraded by wavefront distortion) the spurious, leakage signal (which contains no displacement information) can fool the system electronics by masquerading as a legitimate measurement signal when the measurement beam is blocked (i.e., when there should be no signal and an error should be indicated).

Fig. 1 is a diagrammatic view of a prior art modified Michelson laser interferometer.

Fig. 2 is a diagrammatic view of a portion of the system of Fig. 1 at and adjacent to the detector.

Fig. 3 is a view similar to Fig. 1 of a modified Michelson-type laser interferometer embodying the principles of the invention.

Fig. 4 is a diagrammatic view of a fluffed-out fringe created by interfering two plane and parallel wavefronts of equal intensity.

Fig. 5 is a view of some straight fringes from interference of plane wavefronts of equal intensity, but tilted with respect to each other.

Fig. 6 illustrates a form of the invention in which a slit of width equal to that of a dark band increases the fringe contrast that was lost by the tilted wave fronts of Fig. 5.

Fig. 7 is a view of a portion of the detector assembly of an interferometer embodying the principles of the present invention showing a small aperture in front of the detector assembly to improve fringe contrast and extend the operating range.

Fig. 8 is an interferogram showing a distorted fringe pattern such as may be caused by random, dynamic wavefront distortion resulting from a long-path length in turbulent air.

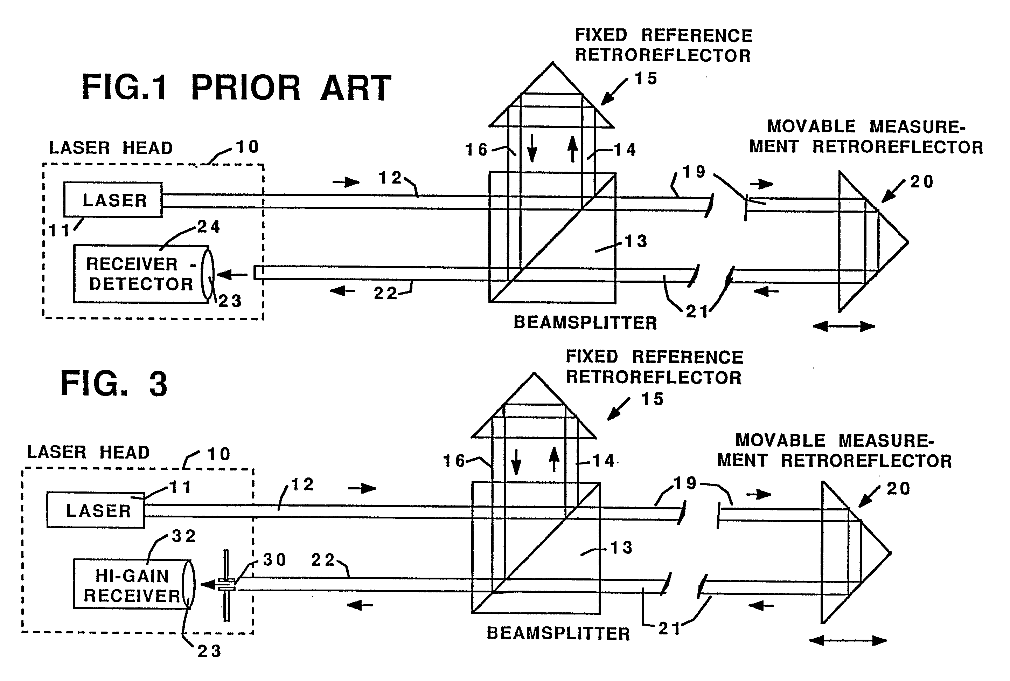

Fig. 1 illustrates diagrammatically the prior art of modified Michelson laser interferometers in its general aspects. Thus, in Fig. 1 there is a laser head 10 with a laser generator or cavity 11 that generates a laser beam 12. The beam 12 proceeds to a beamsplitter 13 where one portion of the laser beam 12 is divided from another portion. This is usually done by intensity or by polarization, so that, for example, horizontally polarized light goes in one direction and vertically polarized laser light goes in another direction. One polarized beam 14 may be sent to a fixed reference retroreflector 15, where it is reflected across a cube corner so that it goes back as a beam 16 to the beamsplitter 13 parallel to the beam 14 but displaced from it.

The other polarized laser beam 19 goes to a movable measurement retroreflector 20, which may be a cube corner from which it is reflected as a beam 21 back to the beamsplitter 13 parallel to the beam 19 but displaced from it.

At the beamsplitter 13 the beam 21 from the movable measurement retroreflector 20 is recombined with the beam 16 from the fixed reference retroreflector 15, and a combined beam 22 then goes back to the laser head 10, where it is directed through a lens 23 to a detector-receiver 24.

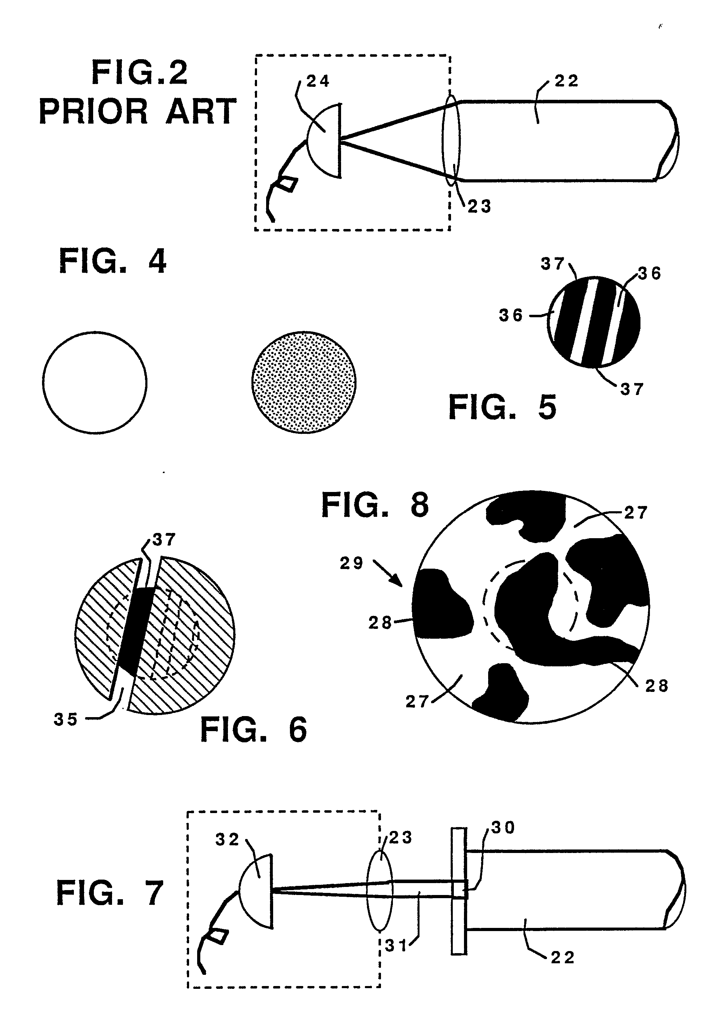

Unfortunately, the wavefronts tend to become distorted if they pass through turbulent air. Although this effect is minimal over short measurement distances, it becomes a problem as the measurement distance increases. The distortion causes noise that is randomly spread across the wavefront. The noise gives the interference pattern a mottled appearance, as shown in Fig. 8, i.e., there are light areas 27 and dark areas 28 across the wavefront 29, rather than the uniformly light or dark disk observed with plane wavefronts as shown in Fig. 4.

Normally the lens 23 directs as much of the light from the combined beam 24 as possible to the detector-receiver 24, to maximize the amplitude of the signal. However, the detector-receiver 24 averages the intensity of the beam it receives. The mottled appearance of the interference pattern is interpreted as gray. Thus, as the wavefront distortion noise increases, the fringe contrast decreases, i.e., the minimum and maximum beam intensities converge. At some point the signal becomes indistinguishable from the noise.

When the distance to be measured is on the order of one hundred feet, normal atmospheric fluctuations can make the fringes in the combined beam disappear into the noise.

A diagrammatic representation embodying the present invention as shown in Figs. 3 and 7. In Figs. 3 and 7 the laser head 10, beamsplitter 13, the fixed retroreflector 15, and the movable retroreflector 20 are present as before, but immediately preceding the detector focusing lens 23 is a small aperture 30. The aperture 30 may be of various shapes; it may be circular, it may be square, in fact, or it may be a slit 35 as shown in Fig. 6. Figs. 3 and 7 show the preferred location of the aperture 30. But depending on the requirements of the measurement, it may be located between the lens 23 and the photodetector 32, at the beamsplitter 13, or at the laser 11 output. In any event, the effect is that described herein. The aperture 30 allows passage of that portion of the recombined beam 22 which is within the area of the aperture 30.

The lens 23 focuses that portion 31 (Fig. 7) of the retroreflected beam 22 which passes through the aperture 30, and only that part is detected to produce the signal sent to a high-gain receiver 32.

The key feature is the use of the aperture 30 to pass only the desired area of retroreflected light and not the remainder of the retroreflected beam. That major portion of the combined beam 22 is eliminated from reaching the high-gain receiver 32. The high-gain receiver 32 may be in the laser head 10, or may be a separate instrument.

Although the aperture 30 attenuates the beam 22, it also decreases the area of the beam over which the interference pattern is averaged by the high-gain receiver 32. If the areas of the interference fringes caused by the wavefront distortion noise are larger than the area of the aperture 30, the signal degradation will be decreased, and the fringe-to-fringe contrast will be increased. This means that the signal-to-noise ratio will also be increased. The signal from the receiver can then be amplified, to remove the effect of the attenuation, recovering a usable measurement signal.

To consider theory at this point, a "fringe" is a bright-to-dark transition which occurs when two waves interfere, as described by W.H. Steel in Interferometry. When two plane, parallel wavefronts from beams of equal intensity (such as the beams 16 and 21) are combined they are said to interfere destructively when they are 180° out of phase and constructively when they are exactly in phase. An observer looking into the combined beams will see no light when the beams are 180° out of the phase and will see an intensity twice that of either beam alone when they are exactly in phase, as shown by black and clear stripes in Fig. 5.

If the relative phase of the beams changes continuously and the combined light is focused on a detector as in Fig. 2, the fringes will come and go: --bright, dark, bright-- and the photodetector current will vary sinusoidally with the phase of the two wavefronts.

In this case, the fringe contrast is maximized at unity (as described by Steel, pg. 46) as the light intensity across the over-lapped beam diameter varies from zero (phase = 180°) to the sum of that of both beams (phase = 0°). Since the phase is constant across the full beam diameter, the fringe is said to be "spread out" or "fluffed out" across the aperture or beam, as shown in Fig. 4.

When one of the wavefronts is tilted an angle $\theta$ with respect to the other, straight fringes or bands 36 and 37 of light and dark are formed across the beam as in Fig. 5, normally, however, in a direction perpendicular to the plane containing the two beams. The number of these bands increases as $\theta$ increases (until at some large $\theta$ they become so finely spaced and numerous that they are no longer visible). As the relative phase of the beam is now varied, these fringes or bands appear to slide sideways across the beam.

If interfered light is focused on a photodetector and the phase is varied continuously, as described earlier, but also $\theta$ is varied, there will be some value of $\theta$ for which a dark band 37 is passing out of the aperture on one side just as a new dark band 37 is appearing on the other side. At this critical tilt angle ($\theta_c$), the fringe contrast has gone to zero. That is, the total light intensity across the beam does not change as the relative phase changes and the amplitude of the sinusoidal photodetector current is decreased to some DC value corresponding to a constant, "gray" light intensity across the beam.

With no variation in detector current, it is impossible to count fringes and therefore to measure distance.

It is possible to bring back a usable signal from the above situation by use of the small aperture 30, or even better in this case a slit 35 (Fig. 6), inserted in the beams in front of the photodetector. Fig. 6 shows a slit 35 equal in width to the width of the dark bands 37 and aligned parallel to the fringes. Note that as the fringes slide by due to phase change between the beams, the light reacting the photodetector 32 varies sinusoidally once again.

It is true that this AC signal is weaker than it was with parallel wavefronts, but since the measurement distance information is contained in the AC variation of the signal, it may be amplified for further processing.

For maximum enhancement of the fringe contrast, the ideal slit width depends on the number of fringes across the aperture. The ideal slit width (W) is:

$$W = \frac{D}{4N} \qquad (1)$$

4

where D is the beam diameter and N is the number of fringes across D.

The number of fringes across the overlapped beams depends on the tilt angle ($\theta$) and is given by:

$$N = \frac{D}{\lambda} \tan \theta \qquad (2)$$

where $\lambda$ is the wavelength of light.

Combining equations (1) and (2) we have the slit width:

$$W = \frac{\lambda}{4 \tan \theta} \qquad (3)$$

In practical applications, such as long range measurements in the presence of air turbulence, the type of wavefront distortion would be a dynamic combination of tilt and complex wavefront deformation. For this case the slit 35 may be replaced by a round or square aperture, the size of which is small compared with the beam diameter 22. The actual size of this aperture is determined emperically for the conditions expected in the measurement.

Presently preferred is a round aperture 30 installed in front of the detector focusing lens. It may be placed directly against the lens 23, on either side, or a few inches away from the lens 23 with no loss of performance (See Fig. 7). In some applications, e.g., in a short-range-measurement with poor quality optics, it may be desirable to place the aperture at the laser 11 output.

The benefits are 1) to enable measurement over longer range or 2) to enable the use of lower grade, cheaper optics in the interferometer, thereby resulting in lower product cost.

The foregoing discussion applies to both heterodyne and homodyne interferometers which may use either polarizing or nonpolarizing beamsplitters.

With a 2.5 mm diameter aperture 30 for a 6 mm diameter laser beam 22, the laser power and the spurious reference path leakage are attenuated 70%, but the fringe contrast (the discernibility of the bright-to-dark transitions which carry the optical path change information) of the desired signal is dramatically enhanced over what could be detected across the full aperture in a turbulent atmosphere. The net effect is to increase the ratio of desired signal to spurious signal. Thus, the now-clean signal can thereupon be amplified and counted without contamination by the spurious, leakage signal, which is left beneath the noise level.

Thus the small aperture of the slit 1) eliminates the spurious leakage signal and 2) increases the fringe contrast. This makes it possible to increase the receiver gain to a level that restores normal operation to the instrument.

A weak optical signal can be enhanced by further attenuating it with a small aperture stop.

The invention improves performance of both heterodyne and homodyne interferometer systems which may use either polarizing or nonpolarizing beamsplitters.

The invention enlarges the operating range of a displacement measuring interferometer in an air environment.

More particularly, the invention improves signal strength when the signal has been weakened by wavefront distortion, as is caused by poor quality component glass or plastic optics.

The invention attenuates spurious polarization leakage signals from other optical paths.

## Claims

1. Apparatus for obtaining an enhanced, clearer measurement signal with improved fringe contrast from a laser interferometer comprising a laser beam source (11), beamsplitter optics (13) for directing one portion of the laser beam along a reference beam path (14,16) and another portion of the laser beam along a measurement beam path (19,21), recombining means (13) for recombining both said beams and focusing means (23) for directing the combined beam (22) to detector (32), said apparatus including in combination therewith: characterised in that it further comprises aperture means (30), mounted in the path of said combined beam and preceding said detector, for providing an aperture opening much smaller in area than said combined beam, said aperture means attenuating the energy of said combined beam, but also increasing the interference fringe contrast at said detector.

2. An apparatus according to claim 1 further comprising high-gain amplifier means connected to said detector (32) for receiving and amplifying said attenuated beam (31).

3. The apparatus of claim 1 or 2 wherein said aperture means (30) comprises a circular aperture opening.

4. The apparatus of claim 1 or 2 wherein said aperture means (30) comprises a rectangular apertuire opening.

5. The apparatus of claim 1 or 2 wherein said aperture means (30) provides a slit opening approximately equal in width to the width of a dark band of said combined beam (22) and aligned parallel to the fringe of said combined beam.

6. The apparatus of any preceding claim wherein said focusing means (23) comprises a lens (23) between said aperture means (30) and said detector (32).

7. The apparatus of any of claims 1 to 5 wherein said aperture means (30) is located between said (23) lens and said detector (32).

8. A method for obtaining an enhanced, clearer measurement signal with improved fringe contrast from a laser interferometer characterised in that it comprises the steps of sending a laser beam (12) through atmospheric air, beamsplitting (13) said laser beam to send one laser beam portion (14,16) to a fixed reference retroreflector (15) and to send the other portion (19,21) of said laser beam to a movable measurement retroreflector (20), retroreflecting both said beams from said retroreflectors to said beamsplitter and recombining them there to produce a combined beam, sending said combined beam through an aperture opening (30) much smaller in area than said combined beam to pass only a small selected portion of said combined beam to a detector, thereby attenuating the energy of said combined beam but increasing the fringe contrast and substantially eliminating spurious signals therefrom, amplifying said attenuated beam from which spurious signals have been substantially eliminated and fringe contrast increased, to produce a fringe with improved "visibility" and detectability.

9. The method of claim 8 further comprising the step of focusing said small selected portion and then detecting it before amplifying it.

10. The method of claim 8 or 9 wherein sending said combined beam (14,16) through an aperture opening (30) comprises using an aperture opening that is a slit approximately equal in width to the width of a dark band of said combined beam.

**FIG.1 PRIOR ART**

LASER HEAD — 10

FIXED REFERENCE RETROREFLECTOR — 15

LASER — 11

RECEIVER - DETECTOR — 24 / 23

16 / 14

12

13

BEAMSPLITTER

19

MOVABLE MEASURE-MENT RETROREFLECTOR — 20

22

21

**FIG. 3**

LASER HEAD — 10

FIXED REFERENCE RETROREFLECTOR — 15

LASER — 11

HI-GAIN RECEIVER — 32 / 23

16 / 14

12

13

30   22

BEAMSPLITTER

19

MOVABLE MEASURE-MENT RETROREFLECTOR — 20

21

EP 0 341 960 A2

# FIG.2
# PRIOR ART

24

22

23

# FIG. 4

# FIG. 5

37

36

36

37

# FIG. 8

27

29

28

27

28

37

35

# FIG. 6

# FIG. 7

32

23

30

31

22